# FASCICULE DE BREVET EUROPEEN

(11) **EP 3 459 760 B1**
(45) Date de publication et mention de la délivrance du brevet: **27.11.2019**
(21) Numéro de dépôt: 18195733.3
(22) Date de dépôt: 20.09.2018
(51) Int. Cl.: B60B 17/00

(54) **DISPOSITIF ABSORBEUR DE BRUIT POUR ROUE DE VÉHICULE FERROVIAIRE ET ROUE DE VÉHICULE FERROVIAIRE ASSOCIÉE**
LÄRMABSORPTIONSVORRICHTUNG FÜR DAS RAD EINES SCHIENENFAHRZEUGS, UND ENTSPRECHENDES SCHIENENFAHRZEUGRAD
NOISE ABSORBER DEVICE FOR RAILWAY VEHICLE WHEEL AND ASSOCIATED RAILWAY VEHICLE WHEEL

(30) Priorité: 20.09.2017 FR 1758721
(43) Date de publication de la demande: 27.03.2019
(73) Titulaire: ALSTOM Transport Technologies, 93400 Saint-Ouen (FR); HUTCHINSON, 75008 Paris (FR)
(72) Inventeur: GUERDER, Jean-Yves, 84300 CAVAILLON (FR); TANNEAU, Olivier, 93400 SAINT OUEN (FR); FAYS, Benjamin, 95620 PARMAIN (FR); GAUTHERET, Pierre-Emmanuel, 76240 LE MESNIL-ESNARD (FR); LONGUEVILLE, Yves, 71210 TORCY (FR)
(74) Mandataire: Lavoix

(56) Documents cités:
- EP-A1- 2 230 096
- EP-A1- 2 979 896
- EP-A2- 0 278 248
- WO-A1-2014/131676
- DE-U1-202006 012 852

## Description

La présente invention concerne un dispositif absorbeur de bruit pour une roue de véhicule ferroviaire, du type comprenant au moins une lame s'étendant radialement depuis une extrémité de liaison propre à être fixée à la périphérie de la roue, jusqu'à une extrémité libre, et au moins une masse d'amortissement fixée sur une face de l'extrémité libre de la lame, à l'écart de l'extrémité de liaison.

Un tel dispositif est connu dans l'état de la technique sous le nom d'absorbeur dynamique ou batteur (voir pour exemple DE 20 2006 012852 U1) Le dispositif est fixé sur la roue de véhicule ferroviaire au moyen de la lame qui est généralement de forme annulaire. Le batteur dynamique agit comme un résonateur dimensionné pour vibrer à une fréquence spécifique en fonction de la rigidité et de la masse du batteur dynamique. Le batteur dynamique est propre à amortir une fréquence propre d'un mode de vibration axial de la roue à l'origine du crissement.

Ce dispositif présente un inconvénient car il permet d'atténuer le crissement généré par les roues uniquement sur une bande de fréquences très étroite centrée sur la fréquence de résonance du batteur dynamique.

Ainsi, même si on multiplie le nombre de batteurs dynamiques, seuls quelques modes de vibrations de roue sont amortis. Un batteur dynamique ne permet pas d'amortir les modes de vibration de la roue autres que ceux pour lesquels il est réglé.

Un objectif de l'invention est donc de proposer un dispositif absorbeur de bruit pour une roue de véhicule ferroviaire, capable d'atténuer le crissement sur une large gamme de fréquences à la fois autour des fréquences des modes vibratoires d'ordre faible mais également au niveau du contenu plus haute fréquence correspondant aux modes vibratoires d'ordres plus élevés.

A cet effet, l'invention a pour objet un dispositif absorbeur de bruit pour une roue de véhicule ferroviaire du type précité, caractérisé en ce que la lame comprend au moins deux couches métalliques et au moins une couche en matériau viscoélastique enserrée entre les deux couches métalliques.

Suivant des modes particuliers de réalisation, le dispositif absorbeur de bruit présente également une ou plusieurs des caractéristiques ci-dessous, considérées individuellement ou selon toutes les combinaisons techniquement possibles :
- la ou chaque lame comporte au moins une fente radiale s'étendant sur l'extrémité libre de la lame, la ou chaque fente radiale délimitant une pluralité de branche radiales, chaque branche radiale portant au moins une masse d'amortissement fixée sur son extrémité libre ;
- la ou chaque masse d'amortissement de chaque branche radiale a une masse différente et/ou une position différente sur l'extrémité libre de la lame, d'une branche radiale à une autre ;
- le dispositif comprend deux lames parallèles fixées entre elles au niveau de leurs extrémités de liaison, chaque lame comprenant au moins deux couches métalliques ou composites parallèles et au moins une couche en matériau viscoélastique enserrée entre les deux couches métalliques ou composites ;
- le dispositif a une forme de secteur annulaire ;
- l'épaisseur de la couche viscoélastique est comprise entre 0,05 mm et 2 mm ;
- la masse d'amortissement est fixée à l'écart de l'extrémité de liaison de la lame dégageant un espace annulaire de libre mouvement de la lame.

L'invention a également pour objet une roue pour véhicule ferroviaire comportant au moins un dispositif absorbeur de bruit tel que défini ci-dessus.

Suivant des modes particuliers de réalisation, la roue présente également une ou plusieurs des caractéristiques ci-dessous, considérées individuellement ou selon toutes les combinaisons techniquement possibles :
- la roue comporte une pluralité de dispositifs absorbeurs de bruit tels que définis ci-dessus et l'épaisseur de la lame d'au moins un des dispositifs absorbeurs de bruit est différente de celle d'un autre des dispositifs absorbeurs de bruit ;
- la roue comporte une pluralité de dispositifs absorbeurs de bruit tels que définis ci-dessus répartis sur la périphérie de la roue ;
- au moins un passage est réservé entre les dispositifs absorbeurs de bruit pour le passage de câbles de shunt.

D'autres caractéristiques et avantages de l'invention ressortiront de la description détaillée qui va suivre, donnée à titre indicatif et nullement limitatif, en référence aux figures annexées, parmi lesquelles :
- la Figure 1 est une vue en perspective d'une roue de véhicule ferroviaire selon l'invention, la roue comprenant quatre dispositifs absorbeurs de bruit,
- la Figure 2 est une vue en perspective de l'un des dispositifs absorbeur de bruit de la Figure 1,
- la Figure 3 est une section radiale schématique du dispositif selon l'invention de la Figure 2.

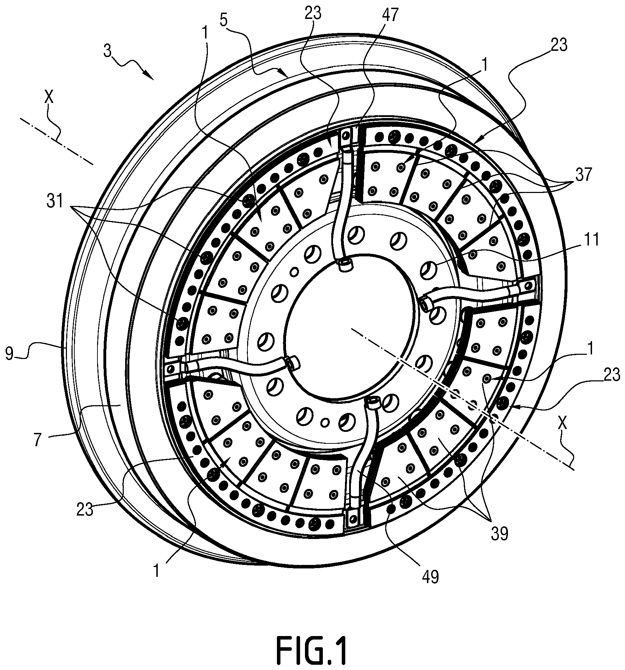

La Figure 1 présente quatre dispositifs absorbeurs de bruit 1 encore appelés dispositifs anti-crissement fixés sur une roue 3 de véhicule ferroviaire.

Le véhicule ferroviaire est par exemple un métro, un tramway ou tout autre véhicule sur rail transportant des passagers ou du fret.

La roue 3 d'axe X-X comporte un bandage 5 délimitant une bande de roulement 7 en contact avec la surface du haut du rail (non représenté) et un boudin latéral 9, qui assure le guidage de la roue 3 en prenant appui sur la face latérale du rail. Le boudin latéral 9 fait saillie radialement et est orienté vers l'intérieur des rails. La roue 3 comporte en outre un moyeu 11 et est fixée à un essieu ou à une fusée, soit par calage, soit par boulonnage (non représenté).

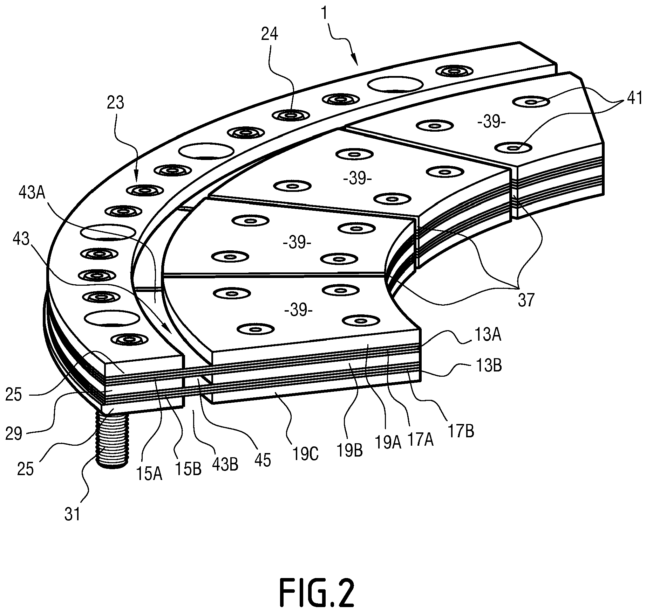

Le dispositif absorbeur de bruit 1, représenté sur la Figure 2, a une forme de secteur annulaire.

Le dispositif absorbeur de bruit 1 comporte une lame extérieure 13A et une lame intérieure 13B qui s'étendent radialement depuis une extrémité de liaison 15A, 15B fixée à la périphérie de la roue 3, jusqu'à une extrémité libre 17A, 17B, orientée vers le centre de la roue 3.

Les lames 13A, 13B s'étendent dans le plan de la roue, i.e. perpendiculairement à l'axe X-X de la roue 3. Elles ont une forme de secteur annulaire et sont parallèles entre elles.

Chacune des lames 13A, 13B comprend une face interne et une face externe, la face interne de la lame 13A étant positionnée en regard de la face externe de la lame 13B.

Le dispositif 1 comporte en outre des masses d'amortissement 19A, 19B, 19C fixées sur les faces internes et externes des extrémités libres 17A, 17B des lames 13A, 13B, à l'écart des extrémités de liaison 15A, 15B.

Plus précisément le dispositif 1 comprend une première masse d'amortissement 19A fixée sur la face externe de l'extrémité libre 17A, une deuxième masse d'amortissement 19B enserrée entre la face interne de l'extrémité libre 17A et la face externe de l'extrémité libre 17B et une troisième masse d'amortissement fixée sur la face interne de l'extrémité libre 17B.

Une bride de fixation 23 ayant la forme d'une portion annulaire, comme visible sur la Figure 1, est fixée sur l'extrémité de liaison 15A, 15B des lames 13A, 13B par collage, ou par des goujons, ou des rivets 24.

La bride de fixation 23 comporte deux flasques de fixation latéraux 25 entre lesquels sont enserrées les extrémités de liaison 15A, 15B des lames 13A, 13B et un flasque de fixation intermédiaire 29.

Le flasque de fixation intermédiaire 29 permet de maintenir un espacement constant entre les deux lames 13A, 13B et notamment entre les extrémités de liaison 15A, 15B des lames 13A, 13B.

La bride de fixation 23 comporte des perçages de réception de vis 31 de liaison à la roue 3.

L'extrémité libre 17A, 17B des lames 13A, 13B s'étend radialement vers le centre de la roue 3. Elle s'étend par exemple jusqu'au moyeu 11 de la roue 3 sans toutefois être en contact avec ce dernier.

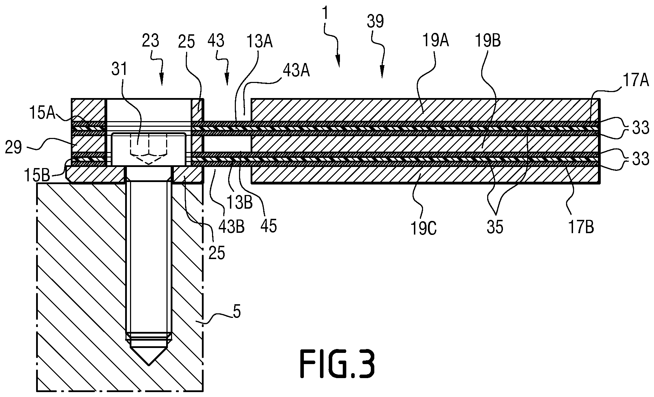

Comme visible sur la Figure 3, chaque lame 13A, 13B comporte au moins deux couches métalliques ou composites 33 parallèles entre elles et au moins une couche en matériau viscoélastique 35 disposée entre lesdites couches métalliques ou composites 33.

Les deux couches métalliques ou composites 33 sont adhérisées à la couche de matériau viscoélastique 35 sur toute leur surface.

Les couches 33 sont typiquement en acier, en aluminium, en titane, voire en matériau composite.

L'épaisseur d'une couche 33 est dépendante de la raideur désirée pour la partie batteur dynamique du dispositif absorbeur de bruit.

Un matériau viscoélastique est un matériau qui possède des propriétés rhéologiques intermédiaires entre un solide élastique et un liquide visqueux. Le comportement d'un tel matériau dépend d'un temps caractéristique associé à la contrainte ou à la déformation appliquée sur le matériau. Ainsi, aux temps courts, par exemple lors d'un choc, le comportement du matériau est élastique. A l'inverse aux temps longs, le comportement du matériau est visqueux, par exemple lorsque le matériau est soumis à une contrainte constante (fluage).

La couche de matériau viscoélastique 35 est par exemple en polymère.

Avantageusement, l'épaisseur de la couche en matériau viscoélastique 35 est comprise entre 0,05 mm et 2 mm, de préférence entre 0,5 mm et 1,5 mm, typiquement égale à 0,5 mm.

Les lames 13A, 13B comportent au moins une fente radiale 37, visible sur la Figure 1, s'étendant au niveau de l'extrémité libre 17A, 17B desdites lames 13A, 13B. Chaque lame 13A, 13B délimite alors, de part et d'autre de ladite fente radiale 37, deux branches radiales 39.

En variante, les lames 13A, 13B sont dépourvues de fente radiale 37.

Dans l'exemple de la Figure 1, les lames 13A, 13B comportent trois fentes radiales 37 délimitant quatre branches radiales 39.

En variante, le nombre de branches radiales est supérieur ou inférieur à quatre.

Les masses d'amortissement 19A, 19B, 19C ont par exemple une forme de secteur annulaire et recouvrent toute la surface des extrémités libres des lames délimitées par les fentes radiales 37, ou au moins 50% de la surface des extrémités libres des lames délimitées par les fentes radiales 37.

Plus généralement, avantageusement, pour chaque lame, la surface radiale de la lame en contact avec les masses d'amortissement est supérieure à la surface radiale de la lame en contact avec les flasques de fixation et également à la surface radiale de l'espace annulaire 43.

Les masses d'amortissement 19A, 19B, 19C sont par exemple en métal, typiquement en acier.

Une pluralité d'organes de fixation 41 traverse de part en part les masses d'amortissement 19A, 19B, 19C et les lames 13A, 13B pour les assembler ensemble.

En variante, les masses d'amortissement 19A, 19B, 19C sont collées sur les lames lame 13A, 13B.

Typiquement, les épaisseurs de la masse intermédiaire 19C et du flasque de fixation intermédiaire 29 sont identiques.

Les masses d'amortissement 19A, 19B, 19C de chaque branche radiale 39 ont avantageusement une masse différente d'une branche radiale 39 à une autre.

Avantageusement, la masse d'amortissement 19A, 19B, 19C de chaque branche radiale 39 a une position différente sur l'extrémité libre 17A, 17B de la lame 13A, 13B d'une branche radiale 39 à une autre.

Les masses d'amortissement 19A, 19B, 19C sont fixées à l'écart de l'extrémité de liaison 15A, 15B des lames 13A, 13B et de la bride de fixation 23 dégageant ainsi un espace annulaire 43 de libre mouvement des lames 13A, 13B.

L'espace annulaire 43 comporte ainsi deux gorges extérieure 43A et intérieure 43B s'ouvrant respectivement vers l'extérieur et l'intérieur et délimitées entre les masses extérieure 19A et intérieure 19C, et la bride de fixation 23.

La lame extérieure 13A, la lame intérieure 13B, le flasque de fixation intermédiaire 29 et la masse intermédiaire 19B délimitent un espace annulaire 45 creux.

La largeur radiale de l'espace annulaire 43 de libre mouvement est comprise entre 5mm et 15 mm.

Les largeurs des gorges extérieure 43A et intérieure 43B sont par exemple identiques.

Selon un mode de réalisation non représentée, les largeurs des gorges extérieure 43A et intérieure 43B sont différentes.

Comme visible sur la Figure 1, les dispositifs absorbeurs de bruit 1 sont avantageusement répartis sur la périphérie de la roue 3 de manière à ce qu'au moins un passage 47 puisse être réservé, entre les dispositifs absorbeurs de bruit 1, pour le passage de câbles de shunt 49 reliant le bandage 5 de la roue 3 à l'essieu de la roue 3.

La roue 3 comporte ici quatre dispositifs absorbeurs de bruit 1 et quatre câbles de shunt 49.

Les dispositifs absorbeurs de bruit 1 sont typiquement fixés sur la roue 3 selon une répartition périphérique régulière à symétrie radiale.

Avantageusement, l'épaisseur des lames 13A, 13B de chaque dispositif absorbeur de bruit 1 de la roue 3 est différente d'un dispositif absorbeur de bruit 1 à un autre.

Avantageusement encore, les dispositifs absorbeurs de bruit 1 sont identiques par symétrie radiale.

Le nombre de câbles de shunt 49 et de dispositifs absorbeur de bruit 1 représentés à la figure 1 est donné uniquement à titre d'exemple.

En variante, la roue 3 comprend par exemple un unique dispositif absorbeur de bruit 1, par exemple formant un anneau fermé.

Selon une autre variante, la roue 3 comprend un ou plusieurs câbles de shunt 49 disposés sur une face de la roue 3 opposée à celle qui reçoit les dispositifs absorbeurs de bruit 1.

Selon une autre variante, le nombre de câbles de shunt 49 est inférieur ou supérieur à 4 et est, par exemple, nul.

Selon une autre variante, les dispositifs absorbeurs de bruit 1 sont positionnés sur une face interne de la roue 3 et non sur une face externe de la roue 3 comme représenté à la figure 1.

Selon une autre variante, les dispositifs absorbeurs de bruit 1 sont positionnés à la fois sur la face interne de la roue 3 et sur la face externe de la roue 3.

Selon une autre variante le dispositif absorbeur 1 comprend une seule lame ou plus de deux lames, le nombre de masses d'amortissement étant alors adapté en fonction du nombre de lames.

Selon une autre variante, les lames 13A et 13B sont accolées l'une à l'autre et le dispositif absorbeur de bruit 1 est dépourvu de flasque de fixation intermédiaire 29 et avantageusement également de la deuxième masse d'amortissement 19B.

Le fonctionnement du dispositif absorbeur de bruit 1 selon l'invention va maintenant être décrit.

Sous l'effet des efforts engendrés par le roulement sur un rail, et plus particulièrement dans les courbes de faible rayon, la roue 3 entre en vibration et provoque un crissement.

Le dispositif absorbeur de bruit 1 selon l'invention agit comme un batteur dynamique ou absorbeur dynamique réglé pour vibrer à une fréquence spécifique qui correspond à une fréquence propre d'un mode de vibration axial de la roue 3.

La fréquence de vibration du batteur dynamique est proportionnelle à la racine carrée du rapport entre la raideur K du batteur dynamique, qui agit de manière analogue à un ressort, et une masse M formée des masses d'amortissement 19A, 19B, 19C.

La raideur K du dispositif 1 selon l'invention dépend notamment de l'épaisseur de chacune des lames 13A, 13B, de la distance entre les deux lames 13A, 13B, et de la largeur de l'espace annulaire 43 de libre mouvement, i.e. de la position des masses d'amortissement 19A, 19B, 19C sur l'extrémité libre 17A, 17B de chacune des lames 13A, 13B.

Chaque branche radiale 39 du dispositif absorbeur de bruit 1 agit ainsi comme un batteur dynamique indépendant et permet d'amortir une fréquence spécifique du crissement de la roue.

Ainsi, le dispositif 1 atténue les fréquences propres liées aux ordres des modes de la roue 3 les plus impactés par le crissement en courbe.

Les fréquences associées aux modes de roue supérieurs (fréquences plus élevées) sont traitées par de l'amortissement structural. Les masses d'amortissement 19A, 19B, 19C fixées sur les lames 13A, 13B vibrent radialement relativement les unes par rapport aux autres et cisaillent les couches de matériau viscoélastique 35 des lame 13A, 13B permettant la dissipation d'énergie.

Ainsi, le dispositif absorbeur de bruit 1 selon l'invention est particulièrement avantageux car il permet de réduire le crissement de la roue 3. En effet, il agit sur une large gamme de fréquences en couplant les avantages de l'amortissement par batteur dynamique et de l'amortissement par cisaillement d'une couche viscoélastique

Le dispositif selon l'invention 1 présente également l'avantage de pouvoir être installé sur du matériel existant et d'être dimensionné en fonction des modes de roue particuliers.

Dans un mode de réalisation non représenté, le dispositif absorbeur de bruit comporte une seule lame. La bride de fixation comporte alors uniquement un flasque de fixation extérieur et un flasque de fixation inférieur qui maintiennent la lame fixée au bandage 5 de la roue 3.

La lame comporte une structure identique à ce qui a été décrit précédemment et le dispositif comporte alors deux masses d'amortissements fixées sur chacune des faces de l'extrémité libre de la lame.

Les modes de réalisation et variantes envisagés ci-dessus sont propres à être combinés entre eux pour donner lieu à d'autres modes de réalisation de l'invention.

## Revendications

1. Dispositif absorbeur de bruit (1) pour roue de véhicule ferroviaire comportant :
- au moins une lame (13A, 13B) s'étendant radialement depuis une extrémité de liaison (15A, 15B) propre à être fixée à la périphérie de la roue (3), jusqu'à une extrémité libre (17A, 17B),
- au moins une masse d'amortissement (19A, 19B, 19C) fixée sur une face de l'extrémité libre (17A, 17B) de la lame, à l'écart de l'extrémité de liaison (15A, 15B),
**caractérisé en ce que** la lame (13A, 13B) comprend au moins deux couches métalliques ou composites (33) et au moins une couche en matériau viscoélastique (35) enserrée entre les deux couches métalliques ou composites (33).

2. Dispositif absorbeur de bruit (1) selon la revendication 1, **caractérisé en ce que** la ou chaque lame (13A, 13B) comporte au moins une fente radiale (37) s'étendant sur l'extrémité libre (17A, 17B) de la lame (13A, 13B), la ou chaque fente radiale (37) délimitant une pluralité de branche radiales (39), chaque branche radiale (39) portant au moins une masse d'amortissement (19A, 19B, 19C) fixée sur son extrémité libre (17A, 17B).

3. Dispositif absorbeur de bruit (1) selon la revendication 2, **caractérisé en ce que** la ou chaque masse d'amortissement (19A, 19B, 19C) de chaque branche radiale (39) a une masse différente et/ou une position différente sur l'extrémité libre (17A, 17B) de la lame (13A, 13B), d'une branche radiale (39) à une autre.

4. Dispositif absorbeur de bruit (1) selon l'une quelconques des revendications 1 à 3, **caractérisé en ce que** le dispositif (1) comprend deux lames (13A, 13B) parallèles fixées entre elles au niveau de leurs extrémités de liaison (15A, 15B), chaque lame (13A, 13B) comprenant au moins deux couches métalliques ou composites (33) parallèles et au moins une couche en matériau viscoélastique (35) enserrée entre les deux couches métalliques ou composites (33).

5. Dispositif absorbeur de bruit (1) selon l'une quelconque des revendications 1 à 4, **caractérisé en ce que** le dispositif (1) a une forme de secteur annulaire.

6. Dispositif absorbeur de bruit (1) selon l'une quelconque des revendications 1 à 5, **caractérisé en ce que** l'épaisseur de la couche viscoélastique (35) est comprise entre 0,05 mm et 2 mm.

7. Dispositif absorbeur de bruit (1) selon l'une quelconque des revendications 1 à 6, **caractérisé en ce que** la masse d'amortissement (19A, 19B, 19C) est fixée à l'écart de l'extrémité de liaison (15A, 15B) de la lame (13A, 13B) dégageant un espace annulaire (43) de libre mouvement de la lame (13A, 13B).

8. Roue (3) pour véhicule ferroviaire comprenant au moins un dispositif absorbeur de bruit (1) selon l'une quelconque des revendications 1 à 7.

9. Roue (3) pour véhicule ferroviaire selon la revendication 8, **caractérisée en ce que** la roue comporte une pluralité de dispositifs absorbeurs de bruit (1) selon l'une quelconque des revendications 1 à 7, et **en ce que** l'épaisseur de la lame (13A, 13B) d'au moins un des dispositifs absorbeurs de bruit (1) est différente de celle d'un autre des dispositifs absorbeurs (1) de bruit.

10. Roue (3) pour véhicule ferroviaire selon la revendication 8 ou 9, **caractérisée en ce que** la roue comporte une pluralité de dispositifs absorbeurs de bruit (1) selon l'une quelconque des revendications 1 à 7, répartis sur la périphérie de la roue (3).

11. Roue (3) pour véhicule ferroviaire selon la revendication 10, **caractérisée en ce que** qu'au moins un passage (47) est réservé entre les dispositifs absorbeurs de bruit (1) pour le passage de câbles de shunt (49).

## Patentansprüche

1. Schallabsorbervorrichtung (1) für ein Rad eines Schienenfahrzeugs umfassend:
- mindestens eine Lamelle (13A, 13B), die sich radial von einem Verbindungsende (15A, 15B), das geeignet ist, am Umfang des Rades (3) befestigt zu werden, bis zu einem freien Ende (17A, 17B) erstreckt,
- mindestens eine Dämpfungsmasse (19A, 19B, 19C), die an einer Fläche des freien Endes (17A, 17B) der Lamelle mit Abstand zum Verbindungsende (15A, 15B) befestigt ist,
**dadurch gekennzeichnet, dass** die Lamelle (13A, 13B) mindestens zwei Metall-oder Kompositschichten (33) und mindestens eine Schicht aus einem viskoelastischen Material (35), das zwischen den zwei Metall-oder Kompositschichten (33) eingebettet ist, aufweist.

2. Schallabsorbervorrichtung (1) nach Anspruch 1, **dadurch gekennzeichnet, dass** die oder jede Lamelle (13A, 13B) mindestens einen radialen Schlitz (37) aufweist, der sich an dem freien Ende (17A, 17B) der Lamelle (13A, 13B) erstreckt, wobei der oder jeder radiale Schlitz (37) eine Mehrzahl von radialen Abschnitten (39) begrenzt, wobei jeder radiale Abschnitt (39) mindestens eine Dämpfungsmasse (19A, 19B, 19C) trägt, die an seinem freien Ende (17A, 17B) befestigt ist.

3. Schallabsorbervorrichtung (1) nach Anspruch 2, **dadurch gekennzeichnet, dass** die oder jede Dämpfungsmasse (19A, 19B, 19C) jedes radialen Abschnittes (39) eine unterschiedliche Masse und/oder eine unterschiedliche Position an dem freien Ende (17A, 17B) der Lamelle (13A, 13B) von einem radialen Abschnitt (39) zum anderen aufweist.

4. Schallabsorbervorrichtung (1) nach einem beliebigen der Ansprüche 1 bis 3, **dadurch gekennzeichnet, dass** die Vorrichtung (1) zwei parallele Lamellen (13A, 13B) umfasst, die untereinander an ihren Verbindungsenden (15A, 15B) befestigt sind, wobei jede Lamelle (13A, 13B) mindestens zwei parallele Metall-oder Kompositschichten (33) und mindestens eine Schicht aus viskoelastischem Material (35), die zwischen den zwei Metall-oder Kompositschichten (33) eingebettet ist, aufweist.

5. Schallabsorbervorrichtung (1) nach einem beliebigen der Ansprüche 1 bis 4, **dadurch gekennzeichnet, dass** die Vorrichtung (1) eine Winkelsektorform aufweist.

6. Schallabsorbervorrichtung (1) nach einem beliebigen der Ansprüche 1 bis 5, **dadurch gekennzeichnet, dass** die Dicke der viskoelastischen Schicht (35) zwischen 0,05 mm und 2 mm liegt.

7. Schallabsorbervorrichtung (1) nach einem beliebigen der Ansprüche 1 bis 6, **dadurch gekennzeichnet, dass** die Dämpfungsmasse (19A, 19B, 19C) mit Abstand zu dem Verbindungsende (15A, 15B) der Lamelle (13A, 13B) unter Freisetzung eines Ringraums (43) zur freien Bewegung der Lamelle (13A, 13B) befestigt ist.

8. Rad (3) für ein Schienenfahrzeug mindestens eine Schallabsorbervorrichtung (1) nach einem beliebigen der Ansprüche 1 bis 7 umfassend.

9. Rad (3) für ein Schienenfahrzeug nach Anspruch 8, **dadurch gekennzeichnet, dass** das Rad eine Mehrzahl von Schallabsorbervorrichtungen (1) nach einem beliebigen der Ansprüche 1 bis 7 aufweist und dass die Dicke der Lamelle (13A, 13B) von mindestens einer der Schallabsorbervorrichtungen (1) unterschiedlich zu der einer anderen der Schallabsorbervorrichtungen (1) ist.

10. Rad (3) für ein Schienenfahrzeug nach Anspruch 8 oder 9, **dadurch gekennzeichnet, dass** das Rad eine Mehrzahl von Schallabsorbervorrichtungen (1) nach einem beliebigen der Ansprüche 1 bis 7 aufweist, die über den Umfang des Rades (3) verteilt sind.

11. Rad (3) für ein Schienenfahrzeug nach Anspruch 10, **dadurch gekennzeichnet, dass** mindestens ein Durchgang (47) zwischen den Schallabsorbervorrichtungen (1) für die Durchführung von Shuntkabel (49) vorgesehen ist.

## Claims

1. A noise-absorbing device (1) for a railway vehicle wheel, comprising:
- at least one strip (13A, 13B) extending radially from a connecting end (15A, 15B) capable of being fastened to the periphery of the wheel (3), to a free end (17A, 17B),
- at least one damping mass (19A, 19B, 19C) fastened on a face of the free end (17A, 17B) of the strip, away from the connecting end (15A, 15B),
**characterized in that** the strip (13A, 13B) includes at least two metal or composite layers (33) and at least one layer of viscoelastic material (35) gripped between the two metal or composite layers (33).

2. The noise-absorbing device (1) according to claim 1, **characterized in that** the or each strip (13A, 13B) comprises at least one radial slit (37) extending over the free end (17A, 17B) of the strip (13A, 13B), the or each radial slit (37) delimiting a plurality of radial branches (39), each radial branch (39) bearing at least one damping mass (19A, 19B, 19C) fastened on its free end (17A, 17B).

3. The noise-absorbing device (1) according to claim 2, **characterized in that** the or each damping mass (19A, 19B, 19C) of each radial branch (39) has a different mass and/or a different position on the free end (17A, 17B) of the strip (13A, 13B), from one radial branch (39) to another.

4. The noise-absorbing device (1) according to any one of claims 1 to 3, **characterized in that** the device (1) includes two parallel strips (13A, 13B) fastened to one another at their connecting ends (15A, 15B), each strip (13A, 13B) including at least two parallel metal or composite layers (33) and at least one layer of viscoelastic material (35) gripped between the two metal or composite layers (33).

5. The noise-absorbing device (1) according to any one of the preceding claims, **characterized in that** the device (1) is in the form of an annular sector.

6. The noise-absorbing device (1) according to any one of the preceding claims, **characterized in that** the thickness of the viscoelastic layer (35) is comprised between 0.05 mm and 2 mm.

7. The noise-absorbing device (1) according to any one of the preceding claims, **characterized in that** the damping mass (19A, 19B, 19C) is fastened away from the connecting end (15A, 15B) of the strip (13A, 13B), freeing an annular space (43) for free movement of the strip (13A, 13B).

8. A wheel (3) for a railway vehicle comprising at least one noise-absorbing device (1) according to any one of the preceding claims.

9. The wheel (3) for a railway vehicle according to claim 8, **characterized in that** the wheel comprises a plurality of noise-absorbing devices (1) according to any one of claims 1 to 7, and **in that** the thickness of the strip (13A, 13B) of at least one of the noise-absorbing devices (1) is different from that of another of the noise-absorbing devices (1).

10. The wheel (3) for a railway vehicle according to claim 8 or 9, **characterized in that** the wheel comprises a plurality of noise-absorbing devices (1) according to any one of claims 1 to 7, distributed on the periphery of the wheel (3).

11. The wheel (3) for a railway vehicle according to claim 10, **characterized in that** at least one passage (47) is reserved between the noise-absorbing devices (1) for the passage of shunt cables (49).
